# EUROPEAN PATENT APPLICATION

(11) **EP 4 216 558 A1**
(43) Date of publication of application: **26.07.2023**
(21) Application number: 21881727.8
(22) Date of filing: 02.09.2021
(51) Int. Cl.: H04N 21/4335

(54) **METHOD FOR PLAYING AUDIO/VIDEO ONLINE AND ELECTRONIC DEVICE**

(30) Priority: 22.10.2020 CN 202011138720
(71) Applicant: Huawei Technologies Co., Ltd., Shenzhen, Guangdong 518129 (CN)
(72) Inventor: ZHOU, Erhu, Shenzhen, Guangdong 518129 (CN)
(74) Representative: Huawei European IPR
(86) International application number: PCT/CN2021/116181
(87) International publication number: WO 2022/083308

(57) **Abstract**

Embodiments of this application provide an online audio/video play method and an electronic device. The electronic device allocates at least two buffers to a client. When the electronic device plays an audio/video stream online, the at least two buffers are used to separately store audio/video streams that are downloaded for a plurality of times. For example, a second buffer unit is used to store a first segment of audio/video stream obtained by using a first request, and a third buffer unit is used to store a second segment of audio/video stream obtained by using a second request. Then, the electronic device performs audio to video synchronization on audio/video streams in the at least two buffers in batches. Embodiments of this application can improve audio to video synchronization efficiency of the client and reduce frame freezing during online audio/video play.

## Description

### CROSS-REFERENCE TO RELATED APPLICATIONS

This application claims priority to Chinese Patent Application No. 202011138720.6, filed with the China National Intellectual Property Administration on October 22, 2020 and entitled "ONLINE AUDIO/VIDEO PLAY METHOD AND ELECTRONIC DEVICE", which is incorporated herein by reference in its entirety.

### TECHNICAL FIELD

This application relates to the field of internet technologies, and in particular, to an online audio/video play method and an electronic device.

### BACKGROUND

Play online (play online) is an online audio/video play method, and is a method in which a user can directly play audio and video files online without downloading the files to a local device. By using the online play technology, the user can establish a network connection to a server through a client at any time, requests audio and video files from the server, and then plays audio and videos provided by the server. However, if the audio and video files requested by the client are non-uniformly interleaved audio/video streams, significant frame freezing occurs during play on the client. As a result, user experience is affected.

### SUMMARY

Embodiments of this application provide an online audio/video play method and an electronic device, to improve synchronization efficiency of audio/video streams and reduce frame freezing during online audio/video play.

According to a first aspect, an online audio/video play method is provided. The method includes: An electronic device sends a first request to a network device. The electronic device receives a first segment of audio/video stream that is fed back by the network device based on the first request, and stores the first segment of audio/video stream in a first buffer unit, where the first segment of audio/video stream includes a preset quantity of data packets, and the data packets in the first segment of audio/video stream include an audio packet and/or a video packet. If the first segment of audio/video stream is a non-uniformly interleaved audio/video stream, the electronic device reads M data packets from the first buffer unit, and stores the M data packets in a second buffer unit, where M is a positive integer greater than 1, and the non-uniformly interleaved audio/video stream means that a quantity of audio packets and video packets that are included in the first segment of audio/video stream and whose presentation timestamps PTSs are the same and storage locations exceed a specified distance threshold. The electronic device clears data packets in the first buffer unit, and sends a second request to the network device. The electronic device receives a second segment of audio/video stream that is fed back by the network device based on the second request, and stores the second segment of audio/video stream in the first buffer unit, where the second segment of audio/video stream includes a preset quantity of data packets, and the data packets in the second segment of audio/video stream include an audio packet and/or a video packet. The electronic device reads Y data packets from the first buffer unit, and stores the Y data packets in a third buffer unit, where Y is a positive integer greater than 1. The electronic device matches a data packet in the second buffer unit with a data packet in the third buffer unit, and controls, after finding any pair of an audio packet and a video packet whose PTSs are the same, a player to play the pair of the audio packet and the video packet whose PTSs are the same.

In this embodiment of this application, the electronic device allocates two buffers (that is, the second buffer unit and the third buffer unit) to store data packets that are downloaded twice, so as to perform audio to video synchronization on the data packets in the two buffers in batches. Compared with a conventional solution in which audio to video synchronization is performed by repeatedly downloading data packets in a stream for a plurality of times, this embodiment of this application can improve audio to video synchronization efficiency of the client (such as the player). Compared with a technical solution that uses a local buffer, this embodiment of this application can reduce buffer time. Therefore, this embodiment of this application is applicable to online play of audio and a video that are of any sizes, and can reduce frame freezing during online play of all audio and videos.

In a possible design, the electronic device may use the following method to detect whether the first segment of audio/video stream is the non-uniformly interleaved audio/video stream: The electronic device detects, for each audio packet in the first segment of audio/video stream, whether the first segment of audio/video stream has a video packet that has a same PTS as the audio packet. If the first segment of audio/video stream has the video packet that has a same PTS as the audio packet, the electronic device records the audio packet as an interleaved audio packet a1. If the first segment of audio/video stream does not have the video packet that has a same PTS as the audio packet, the electronic device records the audio packet as a non-interleaved audio packet a2. The electronic device detects, for each video packet in the first segment of audio/video stream, whether the first segment of audio/video stream has an audio packet that has a same PTS as the video packet. If the first segment of audio/video stream has the audio packet that has a same PTS as the video packet, the electronic device records the video packet as an interleaved video packet v1. If the first segment of audio/video stream does not have the audio packet that has a same PTS as the video packet, the electronic device records the video packet as a non-interleaved video packet v2. If a ratio of a total quantity of a1 and v1 to a total quantity of a1, v1, a2, and v2 in the first segment of audio/video stream is less than a preset value n, the electronic device determines that the first segment of audio/video stream is a non-uniformly interleaved audio/video stream. In this design manner, the electronic device can detect a non-uniformly interleaved stream more accurately.

In a possible design, the electronic device may determine a value of n based on a play status in which the player plays a historical audio/video stream. If a ratio of a total quantity of a1 and v1 to a total quantity of a1, v1, a2, and v2 in the historical audio/video stream is less than n, the play status of the player is frame freezing. It should be understood that values of n may be different for different players, or may be different for different audio/video streams played on a same player.

In this design manner, the electronic device may determine a value of the regulatory factor n based on actual play effects of streams with different interleaving degrees, so as to prevent a fixed determining condition from causing different play effects for audio/video streams with different interleaving degrees.

In a possible design, when the first segment of audio/video stream includes a first audio packet, the electronic device determines that the first segment of audio/video stream does not include a video packet that has a same PTS as the first audio packet, and then sends the second request to the network device, where the second request is used to request the video packet that has a same PTS as the first audio packet.

In this design manner, the electronic device may request the second segment of audio/video stream based on a matching status between an audio packet and a video packet in the first segment of audio/video stream, so that the second segment of audio/video stream includes a video packet that the first segment of audio/video stream lacks. Therefore, audio to video synchronization efficiency of the player is further improved.

In a possible design, all the M data packets are audio packets, and all the Y data packets are video packets. Alternatively, all the M data packets are video packets, and all the Y data packets are audio packets. Alternatively, the M data packets are first M data packets in the first segment of audio/video stream, and the Y data packets are first Y data packets in the second segment of audio/video stream.

In this design manner, audio to video synchronization efficiency can be further improved.

In a possible design, before reading M data packets from the first buffer unit, the electronic device may first perform matching on data packets in the first buffer unit, and control, after finding any pair of an audio packet and a video packet that have same PTSs, the player to play the pair of the audio packet and the video packet that have the same PTSs. Then, the electronic device stores, in the second buffer unit, an audio packet that is in the first buffer unit and that does not have a matched video packet having a same PTS as the audio packet; or stores, in the second buffer unit, a video packet that is in the first buffer unit and that does not have a matched audio packet having a same PTS as the video packet.

In this design manner, the electronic device may first play, to the full extent, an audio packet and a video packet that have same PTSs. Therefore, audio/video play smoothness can be further improved.

In a possible design, M may equal Y

In a possible design, the method further includes: If the first segment of audio/video stream is a uniformly interleaved audio/video stream, the electronic device reads the data packets in the first buffer unit sequentially based on a stream sequence, and controls, after any pair of an audio packet and a video packet that have same PTSs are read, the player to play the pair of the audio packet and the video packet that have the same PTSs.

In this design manner, the electronic device may use different methods of audio to video synchronization for a uniformly interleaved audio/video stream and a non-uniformly interleaved audio/video stream. Therefore, audio to video synchronization efficiency of the player can be further improved.

According to a second aspect, an embodiment of this application provides an electronic device, including one or more processors and a memory. The memory stores program instructions. When the program instructions are executed by the electronic device, the method according to the first aspect and any possible design in the first aspect in embodiments of this application is implemented.

According to a third aspect, an embodiment of this application provides a chip. The chip is coupled to a memory in a device, so that the chip invokes, when running, program instructions stored in the memory to implement the method according to the first aspect and any possible design of the first aspect in embodiments of this application.

According to a fourth aspect, an embodiment of this application provides a computer-readable storage medium, where the computer-readable storage medium stores program instructions. When the program instructions are executed on an electronic device, the electronic device is enabled to perform the method according to the first aspect and any possible design of the first aspect in embodiments of this application.

According to a fifth aspect, an embodiment of this application provides a computer program product. When the computer program product is run on an electronic device, the electronic device is enabled to perform the method according to the first aspect and any possible design of the first aspect in embodiments of this application.

In addition, for technical effects brought by any possible design manner in the second aspect to the fifth aspect, refer to technical effects brought by different design manners in the method part. Details are not described herein.

### BRIEF DESCRIPTION OF DRAWINGS

FIG. 1 is a possible schematic diagram of a uniformly interleaved audio/video stream;
FIG. 2 is an example schematic diagram of a non-uniformly interleaved audio/video stream;
FIG. 3 is a possible flowchart of a method for audio to video synchronization of a non-uniformly interleaved audio/video stream;
FIG. 4 is a schematic architectural diagram of an online play system applicable to an embodiment of this application;
FIG. 5 is a schematic architectural diagram of another online play system applicable to an embodiment of this application;
FIG. 6 is a schematic diagram showing a hardware structure of an electronic device 200 according to an embodiment of this application;
FIG. 7 is a block diagram showing a software structure of an electronic device 200 according to an embodiment of this application;
FIG. 8 is a flowchart of an online audio/video play method according to an embodiment of this application;
FIG. 9 is a flowchart of a method for detecting a non-uniformly interleaved stream according to an embodiment of this application;
FIG. 10 is a schematic diagram of an audio/video stream;
FIG. 11 is a schematic diagram of a specific method for audio to video synchronization;
FIG. 12 is a schematic diagram of another specific method for audio to video synchronization;
FIG. 13 is another flowchart of an online audio/video play method according to an embodiment of this application;
FIG. 14 is a schematic diagram showing a structure of an electronic device 1400 according to an embodiment of this application; and
FIG. 15 is a schematic diagram showing a structure of an electronic device 1500 according to an embodiment of this application.

### DESCRIPTION OF EMBODIMENTS

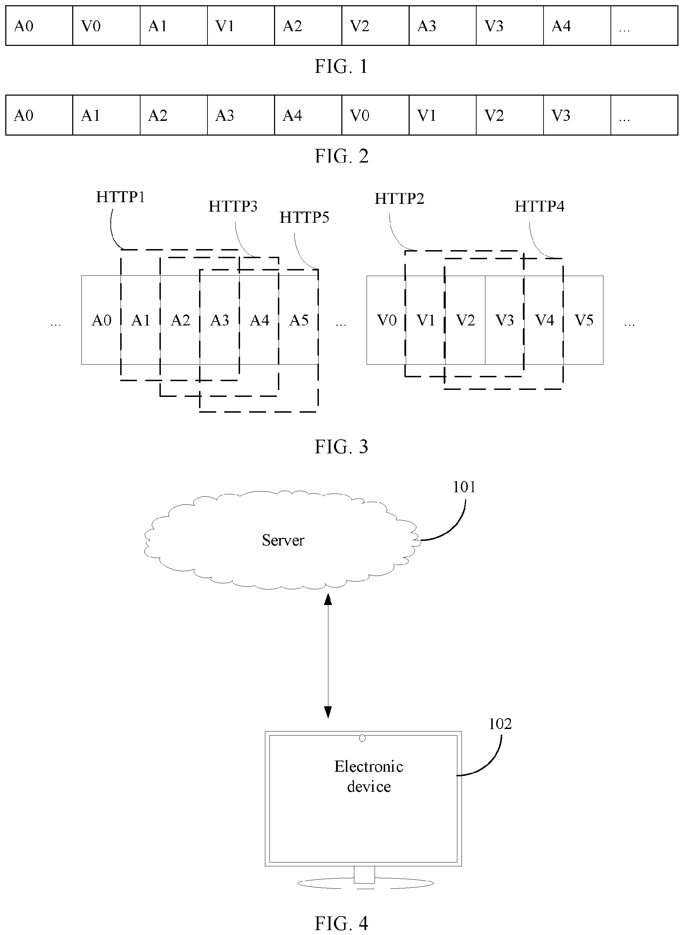

An audio stream and a video stream (which are briefly referred to as audio/video streams) for online play are usually stored in MP4 media files in a uniformly interleaved manner. FIG. 1 is a possible schematic diagram of a uniformly interleaved audio/video stream. A represents an audio (Audio) data packet (which is briefly referred to as an audio packet), and V represents a video (Video) data packet (which is briefly referred to as a video packet). In FIG. 1, audio packets and video packets (which are briefly referred to as audio and video packets) are interleaved in the following sequence: a first audio packet A0, a first video packet V0, a second audio packet A1, a second video packet V1, a third audio packet A2, a third video packet V2, ..., and so on. An audio packet and a video packet that have same play time in a stream are adjacent to each other. An audio packet and a video packet that have same play time have same presentation timestamps (Presentation Timestamp, PTS). The PTS is used to indicate when a client displays (or exports or plays) data. In other words, an audio packet and a video packet that have same PTSs need to be played (or exported or displayed) synchronously.

For example, in FIG. 1, the first audio packet A0 is adjacent to the first video packet V0. The first audio packet A0 and the first video packet V0 have same PTSs and need to be played synchronously. The second audio packet A1 is adjacent to the second video packet V1. The second audio packet A1 and the second video packet V1 have same PTSs and need to be played synchronously. The PTSs of A1 and V1 are later than the PTSs of A0 and V0.

The client downloads an audio/video stream from a server in segments. To be specific, the client downloads a segment of audio/video stream (which includes a preset quantity of audio packets and video packets) each time. The client reads data in each segment of audio/video stream sequentially from front to back. In this way, audio and video data can be read synchronously and then played synchronously.

However, after long-term development of an online play technology, audio streams and video streams in MP4 media files provided by specific audio/video websites are non-uniformly interleaved. For example, on some short-video portal sites (such as TikTok, Kwai, and the like), a user may use a client to produce and upload a video, and watch a video uploaded by another user. When producing a video, the user usually applies effects (such as shaking, zooming, time reversal, and action repetition) to the video to enrich a video play effect. As a result, an audio stream and a video stream may be non-uniformly interleaved due to operations performed by the user on the video.

In a technology of detecting a non-uniformly interleaved audio/video stream, the client performs location analysis on the audio/video stream before playing the audio/video stream, and checks whether a distance between storage locations of an audio packet and a video packet whose PTSs are the same exceeds a specific distance. If distances between storage locations of most pairs of audio and video packets that have same PTSs among detected audio and video packets exceed the specified distance, interleaving performance of the audio/video stream is relatively poor. In this case, the audio/video stream is a non-uniformly interleaved audio/video stream (the non-uniformly interleaved audio/video stream is alternatively referred to as an audio/video stream that is non-uniformly interleaved, an audio/video stream that is interleaved non-uniformly, a non-uniformly interleaved stream, a stream that is non-uniformly interleaved, a stream that is not uniformly interleaved, a non-interleaved audio/video stream, a non-interleaved stream, or the like. A name is not limited herein in this application). If distances between storage locations of most pairs of audio and video packets that have same PTSs among the detected audio and video packets do not exceed the specified distance, the interleaving performance of the audio/video stream is relatively good. In this case, the audio/video stream is a uniformly interleaved audio/video stream (the uniformly interleaved audio/video stream is alternatively referred to as an audio/video stream that is uniformly interleaved, an audio/video stream that is interleaved uniformly, a uniformly interleaved stream, a stream that is uniformly interleaved, an interleaved audio/video stream, an interleaved stream, or the like. A name is not limited in this application).

FIG. 2 is a possible schematic diagram of a non-uniformly interleaved audio/video stream. In FIG. 2, audio packets and video packets are interleaved in the following sequence: a first audio packet A0, a second audio packet A1, a third audio packet A2, a fourth audio packet A3, a fifth audio packet A4, a first video packet V0, a second video packet V1, a third video packet V2, ..., and so on. The audio packets and the audio packets do not appear alternately. As a result, an audio packet and a video packet that have same PTSs may be far away from each other. For example, the "specified distance" is a distance of two data packets. In this case, A0 and V0 are apart from each other for four data packets, A1 and V1 are apart from each other for four data packets, and A2 and V2 are apart from each other for four data packets, which all exceeds the specified distance of two data packets. Therefore, the audio/video stream is non-uniformly interleaved.

However, "the specific distance" and "most" in the foregoing solution are empirical values that are manually set. If values for "the specific distance" and "most" are set, the values become fixed determining criteria. However, in actual application, there is no clear definition for (or clear boundaries between) uniformly and non-uniformly interleaved streams. Streams in different interleaving states have different play effects on different clients because performance of the clients differs. Therefore, a fixed criterion cannot ensure desired play effects of all streams in different interleaving states.

In addition, after a client downloads a non-uniformly interleaved audio/video stream from a server but reads data from the stream by still using a reading method for a uniformly interleaved audio/video stream, that is, by reading data in the stream sequentially from front to back based on a stream sequence, an audio to video synchronization requirement fails to be met during reading.

A solution for audio to video synchronization of a non-uniformly interleaved audio/video stream is to repeatedly download data packets of the stream.

FIG. 3 is a possible flowchart of a method for audio to video synchronization of a non-uniformly interleaved audio/video stream.

Step 1: A client initiates a first hypertext transfer protocol (Hypertext Transfer Protocol, HTTP) request (recorded as HTTP1) to a server, obtains a first data segment (a data size of the data segment is less than or equal to a size of a buffer on the client), and stores the first data segment to the buffer, where the first data segment includes three audio packets: A1, A2, and A3. The client reads the first audio packet A1 from the buffer, and searches the buffer for a video packet whose PTS is the same as that of A1. If the first data segment does not include a video packet whose PTS is the same as that of A1, Step 2 is performed.

Step 2: The client clears the first data segment that is currently stored in the buffer, initiates a second HTTP request (recorded as HTTP2) to the server, obtains a second data segment, and stores the second data segment to the buffer, where the second data segment includes three video packets: V1, V2, and V3. The client reads, from the buffer, the video packet V1 whose PTS is the same as that of A1. After A1 is aligned with V1, the client continues to read a next data packet, that is, the video packet V2, from the buffer, and searches the buffer for an audio packet whose PTS is the same as that of V2. If it is found that the second data segment does not include an audio packet whose PTS is the same as that of V2, Step 3 is performed.

Step 3: The client clears the second data segment that is currently stored in the buffer, initiates a third HTTP request (recorded as HTTP3) to the server, obtains a third data segment, and stores the third data segment to the buffer, where the third data segment includes three audio packets: A2, A3, and A4. The client reads, from the buffer, the audio packet A2 whose PTS is the same as that of V2. After A2 is aligned with V2, the client continues to read a next data packet, that is, the audio packet A3, from the buffer, and searches the buffer for a video packet whose PTS is the same as that of A3. If it is found that the third data segment does not include a video packet whose PTS is the same as that of A3, Step 4 is performed.

Step 4: The client clears the third data segment that is currently stored in the buffer, initiates a fourth HTTP request (recorded as HTTP4) to the server, obtains a fourth data segment, and stores the fourth data segment to the buffer, where the fourth data segment includes three video packets: V2, V3, and V4. The client reads, from the buffer, the video packet V3 whose PTS is the same as that of A3. After A3 is aligned with V3, the client continues to read a next data packet, that is, the video packet V4, from the buffer, and searches the buffer for an audio packet whose PTS is the same as that of V4. If it is found that the fourth data segment does not include an audio packet whose PTS is the same as that of V4, Step 5 is performed.

The foregoing process is performed in polling mode until all audio and videos are played.

It can be learned from the foregoing process that, in this solution, the client needs to repeatedly download data packets of the stream for audio to video synchronization, which is time-consuming and has relatively low reading efficiency. In addition, audio and video data that needs to be played synchronously cannot be read in a timely manner. As a result, frame freezing occurs during audio/video play.

Another solution for audio to video synchronization of a non-uniformly interleaved audio/video stream is to use a local buffer technology. In this solution, before audio/video play, the client obtains a size of an audio/video stream by using an HTTP request, downloads and buffers all audio/video streams whose sizes fall within a specific range, and plays the audio/video streams on a local device after the audio/video streams are downloaded to the local device. This technology reduces time consumed in initiating a plurality of HTTP requests for audio to video synchronization when the client is playing an audio/video stream while downloading the audio/video stream. Therefore, frame freezing is reduced.

However, this solution of buffering audio/video streams to a local device is relatively time-consuming. Consequently, play starts slowly. In other words, a user needs to wait for a relatively long time for the play to start. User experience is poor. In addition, this solution is applicable only to frame freezing that occurs during play of a non-uniformly interleaved audio/video stream whose data size falls within a threshold range (for example, a non-uniformly interleaved audio/video stream whose data size is less than 2 G). This solution is inapplicable to frame freezing that occurs during play of a non-uniformly interleaved audio/video stream whose data size falls outside the threshold range, and therefore cannot fundamentally resolve frame freezing problems that occur during play of all non-uniformly interleaved audio/video streams.

To resolve the foregoing one or more technical issues, embodiments of this application provide an online audio/video play method and an electronic device. In this solution, a size of buffered (buffer) data requested by a client each time is used as a distance for detecting same PTSs, which accurately defines a distance between an audio packet and a video packet that are non-uniformly interleaved. A criterion for determining a non-uniformly interleaved audio/video stream is regulated by a regulatory factor n, and n can be dynamically adjusted by the client based on different video states. This prevents a fixed determining condition from causing different play effects for audio/video streams with different interleaving degrees. Further, the client allocates at least two buffers to store data packets that are downloaded for a plurality of times by using HTTP requests. Then, the client performs audio to video synchronization on the data packets in the at least two buffers in batches. This improves audio to video synchronization efficiency of the client and reduces frame freezing during online audio/video play.

The following describes the technical solutions in embodiments of this application with reference to the accompanying drawings in embodiments of this application.

In the descriptions of embodiments of this application, the following terms "first" and "second" are merely used for a description purpose, and shall not be understood as an indication or implication of relative importance or implicit indication of a quantity of indicated technical features. Therefore, a feature limited by "first" or "second" may explicitly or implicitly include one or more features. In the descriptions of embodiments of this application, unless otherwise specified, "a plurality of" means two or more than two.

FIG. 4 is a schematic architectural diagram of an online play system applicable to an embodiment of this application. The system includes a server 101 and an electronic device 102.

The server 101 stores a media file. The media file may be in an MP4 format or another format, which is not limited in this application. The server 101 may provide the electronic device 102 with audio/video streams, for example, various media streams such as movies, television, and short videos. The server 101 may be any electronic device having a computing capability, such as a tablet, a notebook computer, a server, a wearable device, or an audio/video play device, or an electronic device system including a plurality of such electronic devices. This is not specifically limited in this embodiment of the present invention.

A client (Client) corresponding to the server 101 is installed on the electronic device 102. The client, also referred to as a user end, is a program that corresponds to a server and provides local audio and video services for a user. For example, if the server 101 is a Huawei server, the client may be a "HUAWEI Video" app installed on the electronic device 102. The electronic device 102 may establish a communication connection to the server 101 by running the client, and decode and play an audio/video stream and the like from the server 101. In some possible implementations, the client may be specifically a media player (Media Renderer, MR).

For example, the electronic device 102 may request an audio/video stream from the server 101 through a client, and detect a non-uniformly interleaved stream and play audio and a video online by using the technical solutions provided in this application.

In FIG. 4, one electronic device 102 is used as an example. In actual application, there may be a plurality of electronic devices 102 in the online play system.

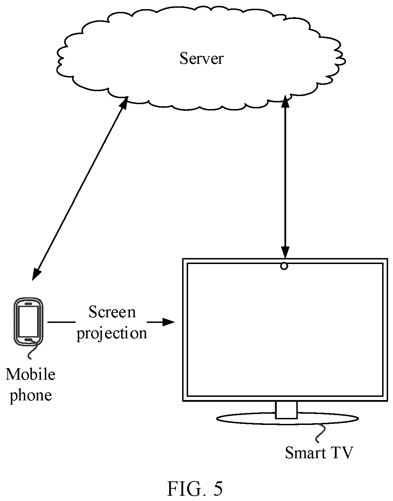

FIG. 5 is a schematic architectural diagram of another online play system applicable to an embodiment of this application. The system includes a server, a mobile phone, and a smart TV The server may provide an audio/video stream. A client (such as a player) corresponding to the server is installed on the mobile phone. The mobile phone may request an audio/video stream from the server through the client, and detect a non-uniformly interleaved stream and play audio and a video online by using the technical solutions provided in this application.

When the mobile phone and the smart TV reside in a same local area network, for example, when the mobile phone and the smart TV are connected to same wireless fidelity (Wireless Fidelity, Wi-Fi), the mobile phone may transmit data to the smart TV by using a screen projection protocol, and control the smart TV to play audio and a video. The screen projection protocol may be a digital living network alliance (Digital Living Network Alliance, DLNA) protocol, an AirPlay push protocol, a Lelink protocol, or the like. This is not limited in this application.

For example, when playing an audio/video stream obtained from the server, the mobile phone detects a screen projection operation. In response to the screen projection operation, the mobile phone searches for an electronic device that supports a screen projection service in the Wi-Fi network. After finding the smart TV, the mobile phone sends a video address of the audio/video stream that is currently played to the smart TV After receiving the address, the smart TV requests a corresponding audio/video stream from the server based on the address, and plays the audio/video stream. In this way, screen projection from the mobile phone to the smart TV is implemented.

During screen projection, the mobile phone can control a play progress of the smart TV For example, the mobile phone can instruct the smart TV to pause play, play a next episode, adjust a volume, or the like. It may be understood that the mobile phone acts as a control point in a screen projection process. The mobile phone initializes and configures a connection between the smart TV and the server, but does not directly participate in content transmission in a real sense. Content transmission is implemented by the server and the smart TV

In the screen projection process, after downloading an audio/video stream, the smart TV may further detect a non-uniformly interleaved stream and play audio and a video online by using the technical solutions provided in this application.

It should be understood that the electronic device in embodiments of this application may be any electronic device that has a capability of connecting to a network and a capability of playing audio and a video. For example, the electronic device in embodiments of this application may be a mobile phone (mobile phone), a tablet (pad), a computer with a wireless transceiver function, a virtual reality (virtual reality, VR) device, an augmented reality (augmented reality, AR) device, a wireless device in industrial control (industrial control), a wireless device in unmanned driving (self driving), a wireless device in telemedicine (remote medical), a wireless device in a smart grid (smart grid), a wireless device in transportation safety (transportation safety), a wireless device in a smart city (smart city), a wireless devices in smart home (smart home), or the like.

By using an example in which the electronic device is a mobile phone, the following describes a schematic diagram of a structure of an electronic device applied to an embodiment of this application.

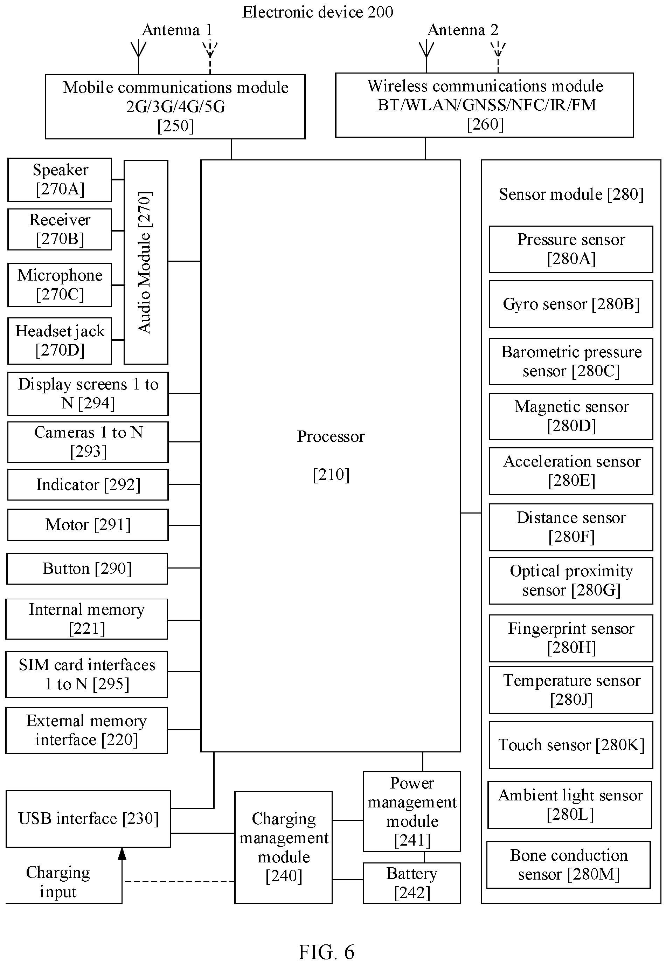

FIG. 6 is a schematic diagram showing a hardware structure of an electronic device 200 according to an embodiment of this application.

The electronic device 200 may include a processor 210, an external memory interface 220, an internal memory 221, a universal serial bus (universal serial bus, USB) interface 230, a charging management module 240, a power management module 241, a battery 242, an antenna 1, an antenna 2, a mobile communications module 250, a wireless communications module 260, an audio module 270, a speaker 270A, a receiver 270B, a microphone 270C, a headset interface 270D, a sensor module 280, a button 290, a motor 291, an indicator 292, a camera 293, a display screen 294, a subscriber identification module (subscriber identification module, SIM) card interface 295, and the like. The sensor module 280 may include a pressure sensor 280A, a gyro sensor 280B, a barometric pressure sensor 280C, a magnetic sensor 280D, an acceleration sensor 280E, a distance sensor 280F, an optical proximity sensor 280G, a fingerprint sensor 280H, a temperature sensor 280J, a touch sensor 280K, an ambient light sensor 280L, a bone conduction sensor 280M, and the like.

It may be understood that the structure shown in this embodiment of this application does not constitute a limitation on the electronic device 200. In some other embodiments of this application, the electronic device 200 may include more or fewer components than those shown in the figure, or combine some components, or split some components, or have different component arrangements. The components shown in the figure may be implemented by hardware, software, or a combination of software and hardware.

The processor 210 may include one or more processing units. For example, the processor 210 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural processing unit (neural processing unit, NPU). Different processing units may be independent components, or may be integrated into one or more processors. In this embodiment of this application, execution of the online audio/video play method may be controlled by the processor 210 or completed by the processor 210 by invoking another component. For example, the processor 210 invokes a processing program stored in the internal memory 221 in this embodiment of this application or invokes, by using the external memory interface 220, a processing program stored in a third-party device in this embodiment of this application, to dynamically adjust a determining factor of a non-uniformly interleaved stream. This prevents a fixed determining condition from causing different play effects for audio/video streams with different interleaving degrees. In addition, the processor 210 allocates two buffers to a client, to read video and audio packets of downloaded data in batches. This improves audio to video synchronization efficiency of the client.

The internal memory 221 may include a program storage area and a data storage area. The program storage area may store an operating system, an application required by at least one function (such as an audio play function or a video play function), and the like. The data storage area may store data (such as audio data, video data, and play logs), and the like created in a process of using the electronic device 200. In addition, the internal memory 221 may include a high-speed random access memory, and may further include a non-volatile memory, for example, at least one magnetic disk storage device, a flash memory, or a universal flash storage (universal flash storage, UFS) device. The internal memory 221 may be configured to store computer-executable program code of the online audio/video play solution provided in this embodiment of this application, where the executable program code includes instructions. The processor 210 may run the computer-executable program code that is of the interface switching solution and that is stored in the internal memory 221, so that the electronic device 200 can implement the online audio/video play solution provided in this embodiment of this application.

The electronic device 200 implements a display function by using the GPU, the display screen 294, the application processor, and the like. For example, the electronic device 200 displays video data in an audio/video stream obtained from a server. The GPU is a microprocessor for image processing, and is connected to the display screen 294 and the application processor. The GPU is configured to perform mathematical and geometric computation, and render an image. The processor 210 may include one or more GPUs that execute program instructions to generate or change display information.

The electronic device 200 may further implement a photographing function by using the ISP, the camera 293, the video codec, the GPU, the display screen 294, the application processor, and the like.

The SIM card interface 295 is configured to connect to a SIM card. The SIM card may be inserted into the SIM card interface 295 or removed from the SIM card interface 295, to be in contact with or separate from the electronic device 200. The electronic device 200 may support one or N SIM card interfaces, where N is a positive integer greater than 1. The SIM card interface 295 may support a nano-SIM card, a micro-SIM card, a SIM card, and the like. A plurality of cards may be simultaneously inserted into a same SIM card interface 295. The plurality of cards may be of a same type or different types. The SIM card interface 295 may also be compatible with different types of SIM cards. The SIM card interface 295 may also be compatible with an external storage card. The electronic device 200 interacts with a network by using the SIM card, to implement a call function, a data communication function, and the like. In some embodiments, the electronic device 200 uses an eSIM, that is, an embedded SIM card.

A wireless communication function of the electronic device 200 may be implemented by using the antenna 1, the antenna 2, the mobile communications module 250, the wireless communications module 260, the modem processor, the baseband processor, and the like. The antenna 1 and the antenna 2 are configured to transmit and receive an electromagnetic wave signal. Each antenna in the electronic device 200 may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communications module 250 may provide a wireless communication solution that is applied to the electronic device 200, for example, a 2G/3G/4G/5G communication solution, or the like. The mobile communications module 250 may include at least one filter, a switch, a power amplifier, a low noise amplifier (low noise amplifier, LNA), and the like. The mobile communications module 250 may receive an electromagnetic wave through the antenna 1, perform processing such as filtering or amplification on the received electromagnetic wave, and transmit a processed electromagnetic wave to the modem processor for demodulation. The mobile communications module 250 may further amplify a signal modulated by the modem processor, and convert the signal into an electromagnetic wave for radiation through the antenna 1. In some embodiments, at least some functional modules in the mobile communications module 250 may be disposed in the processor 210. In some embodiments, at least some functional modules of the mobile communications module 250 may be disposed in a same component as at least some modules of the processor 210.

The wireless communications module 260 may provide a wireless communication solution that is applied to the electronic device 200 and that includes a wireless local area network (wireless local area network, WLAN) (such as a wireless fidelity (wireless fidelity, Wi-Fi) network), Bluetooth (Bluetooth, BT), a global navigation satellite system (global navigation satellite system, GNSS), frequency modulation (frequency modulation, FM), a near-field communication (near field communication, NFC) technology, and an infrared radiation (infrared radiation, IR) technology. The wireless communications module 260 may be one or more components integrating at least one communications processor module. The wireless communications module 260 receives an electromagnetic wave through the antenna 2, performs frequency modulation and filtering processing on an electromagnetic wave signal, and sends a processed signal to the processor 210. The wireless communications module 260 may further receive a to-be-sent signal from the processor 210, perform frequency modulation and amplification on the signal, and convert the signal into an electromagnetic wave for radiation through the antenna 2.

In some embodiments, in the electronic device 200, the antenna 1 and the mobile communications module 250 are coupled, and the antenna 2 and the wireless communications module 260 are coupled. In this way, the electronic device 200 can communicate with a network and another device by using a wireless communications technology. The wireless communications technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, the GNSS, the WLAN, the NFC, the FM, the IR technology, and/or the like.

In some other embodiments of this application, the electronic device 200 may include more or fewer components than those shown in the figure, or combine some components, or split some components, or have different component arrangements. The components shown in the figure may be implemented by hardware, software, or a combination of software and hardware.

A software system of the electronic device 200 may use a layered architecture, an event-driven architecture, a microkernel architecture, a microservice architecture, or a cloud architecture. In this embodiment of this application, an example of an Android system of a layered architecture is used to describe a software structure of the electronic device 200.

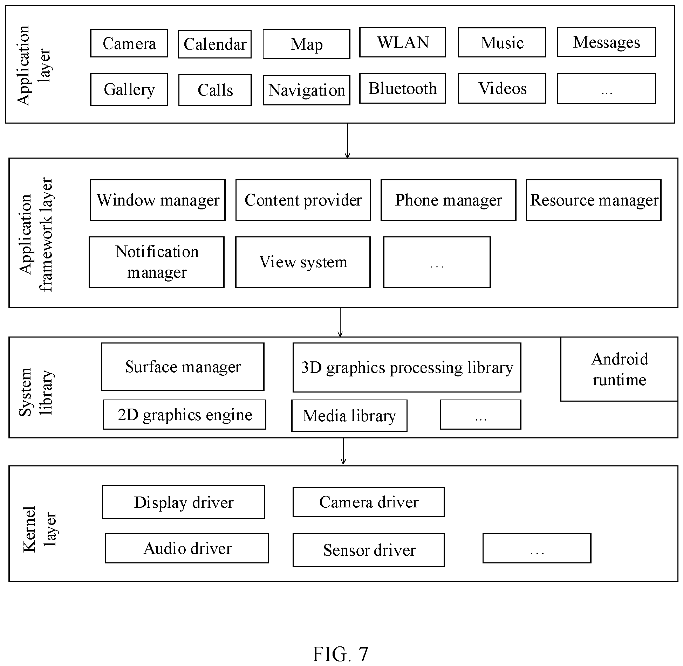

FIG. 7 is a block diagram showing the software structure of the electronic device 200 according to an embodiment of this application. A software module and/or code of the software structure may be stored in the internal memory 221. When running the software module or the code, the processor 210 performs the online audio/video play method provided in embodiments of this application.

In a layered architecture, software is divided into several layers, and each layer has a clear role and task. The layers communicate with each other through a software interface. In some embodiments, the Android system is divided into the following four layers from top to bottom: an application layer, an application framework layer, an Android runtime (Android runtime) and a system library, and a kernel layer from top to bottom.

The application layer may include a series of application packages.

As shown in FIG. 7, the application packages may include applications such as Phone, Camera, Gallery, Calendar, Calls, Map, Navigation, WLAN, Bluetooth, Music, Videos, and Messages.

The application framework layer provides an application programming interface (application programming interface, API) and a programming framework for an application at the application layer. The application framework layer includes some predefined functions.

As shown in FIG. 7, the application framework layer may include a window manager, a content provider, a view system, a phone manager, a resource manager, a notification manager, and the like.

The window manager is configured to manage a window program. The window manager may obtain a size of the display screen, determine whether there is a status bar, perform screen locking, take a screenshot, and the like.

The content provider is configured to store and obtain data, and enable the data to be accessed by an application. For example, the data includes audio and video data obtained from a server, and a browsing history and a bookmark of the electronic device.

The view system includes visual controls such as a control for displaying a text and a control for displaying an image. The view system may be configured to construct an application. A display interface may include one or more views. For example, a display interface that includes a notification icon for SMS messages may include a view for displaying text and a view for displaying an image.

The phone manager is configured to provide a communication function for the electronic device, for example, status management of a connection to the server.

The resource manager provides various resources for an application, such as a localized character string, an icon, an image, and a video file.

The notification manager enables an application to display notification information in a status bar, and may be configured to convey a notification message. The displayed notification information may automatically disappear after a short pause without user interaction. For example, the notification manager is configured to notify that an audio or a video is downloaded, provide a message notification, and the like. The notification manager may alternatively display a notification in a top status bar of the system in a form of a graph or scrollable text, for example, a notification of an application running in the background or a notification that appears on a screen in a form of a dialog box. For example, text information is displayed in the status bar, a prompt tone is given, the electronic device vibrates, or the indicator light blinks.

The Android runtime includes a kernel library and a virtual machine. The Android runtime is responsible for scheduling and management of the Android system.

The kernel library includes two parts: a function that needs to be invoked in Java and a kernel library of Android.

The application layer and the application framework layer run on the virtual machine. The virtual machine executes java files of the application layer and the application framework layer as binary files. The virtual machine is configured to implement functions such as object lifecycle management, stack management, thread management, security and exception management, and garbage collection.

The system library may include a plurality of functional modules, for example, a surface manager (surface manager), a media library (Media Libraries), a 3D graphics processing library (such as OpenGL ES), and a 2D graphics engine (such as SGL).

The surface manager is configured to manage a display subsystem and provide fusion of 2D and 3D layers for a plurality of applications.

The media library supports playback and recording in a plurality of commonly used audio and video formats, and static image files. The media library may support a plurality of audio and video coding formats such as MPEG-4, H.264, MP3, AAC, AMR, JPG, and PNG.

The 3D graphics processing library is configured to implement 3D graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver. The hardware may refer to various types of sensors, for example, an acceleration sensor, a gyro sensor, a touch sensor, and a pressure sensor in embodiments of this application.

It should be understood that a software program and/or a module corresponding to the software architecture in FIG. 7 are/is stored in the internal memory 221 in the electronic device 200 shown in FIG. 6.

The following describes in detail the solution provided in the embodiments of this application by using an example in which embodiments of this application are applied to the electronic device 200.

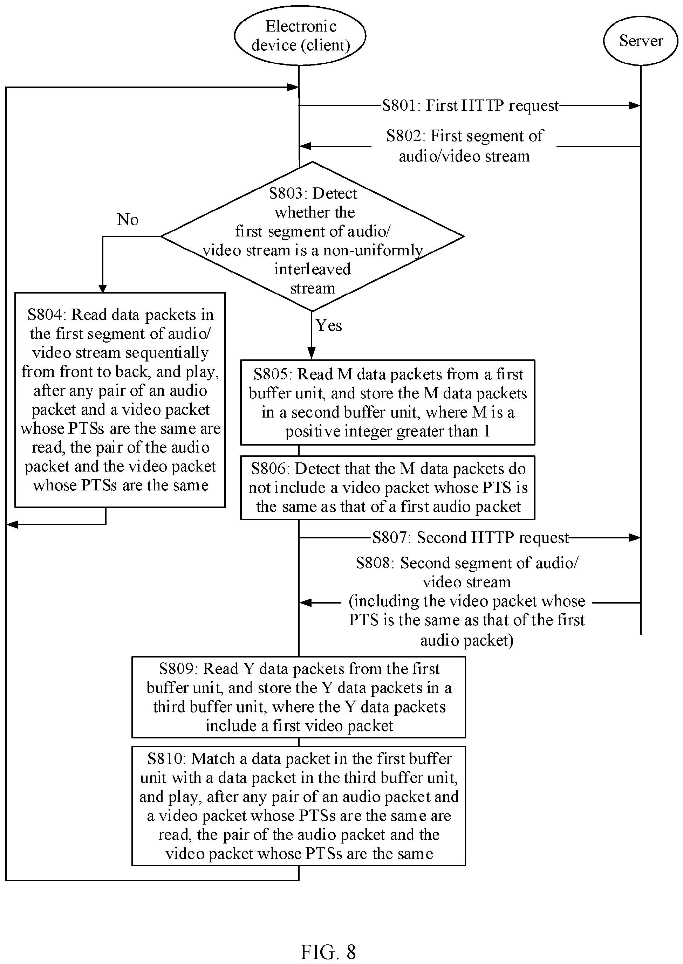

FIG. 8 shows an online audio/video play method according to an embodiment of this application. The method includes the following steps.

S801: An electronic device sends a first HTTP request to a server through a client, and the server receives the first HTTP request.

It may be understood that this embodiment of this application uses an example in which the client communicates with the server based on an HTTP protocol. Therefore, a type of a request sent by the electronic device to the server through the client is an HTTP request. However, in actual application, the client may alternatively communicate with the server based on another protocol. In other words, the client may alternatively send another type of request to the server. This is not limited in this application.

S802: The server returns a first segment of audio/video stream to the electronic device in response to the first HTTP request. The electronic device receives the first segment of audio/video stream, and stores the first segment of audio/video stream in a first buffer unit.

The first buffer unit is a buffer (Buffer) allocated by the electronic device for storing a downloaded audio/video stream. A data packet that is downloaded by using an HTTP request each time is first stored in the first buffer unit. It should be understood that, each time before the electronic device sends an HTTP request, the electronic device needs to clear data in the first buffer unit, so as to store a data packet downloaded by using the HTTP request. It should be understood that the first buffer unit may be a part of a storage space in an internal memory of the electronic device.

In this embodiment of this application, a data size of an audio/video stream requested by the electronic device by using an HTTP request each time is preset, for example, preset to a size that is of data buffered in one transmission and that is specified by the HTTP protocol. The preset size does not exceed a size of the first buffer unit allocated by the electronic device for storing a downloaded audio/video stream.

For ease of understanding, the first segment of audio/video stream is recorded as Buffer-1, and Buffer-1 includes at least two data packets (or at least two data packets). In this embodiment of this application, data packets are of the following two data types: audio and video. A data packet of the audio data type may also be referred to as an audio packet, and a data packet of the video data type may also be referred to as a video packet.

It may be understood that the first segment of audio/video stream may include only an audio packet, may include only a video packet, or may include both an audio packet and a video packet. A specific data type of a data packet in the first segment of audio/video stream is determined by a format of a media file stored on the server.

S803: The electronic device detects whether the first segment of audio/video stream buffered in the first buffer unit is a non-uniformly interleaved stream.

If the first segment of audio/video stream is not a non-uniformly interleaved stream (in other words, the first segment of audio/video stream is a uniformly interleaved stream), S804 is performed.

If the first segment of audio/video stream is a non-uniformly interleaved stream, S805 to S810 are performed.

S804: The electronic device reads the data packets in the first buffer unit sequentially based on a stream sequence, and plays, after any pair of an audio packet and a video packet whose PTSs are the same are read, the pair of the audio packet and the video packet whose PTSs are the same.

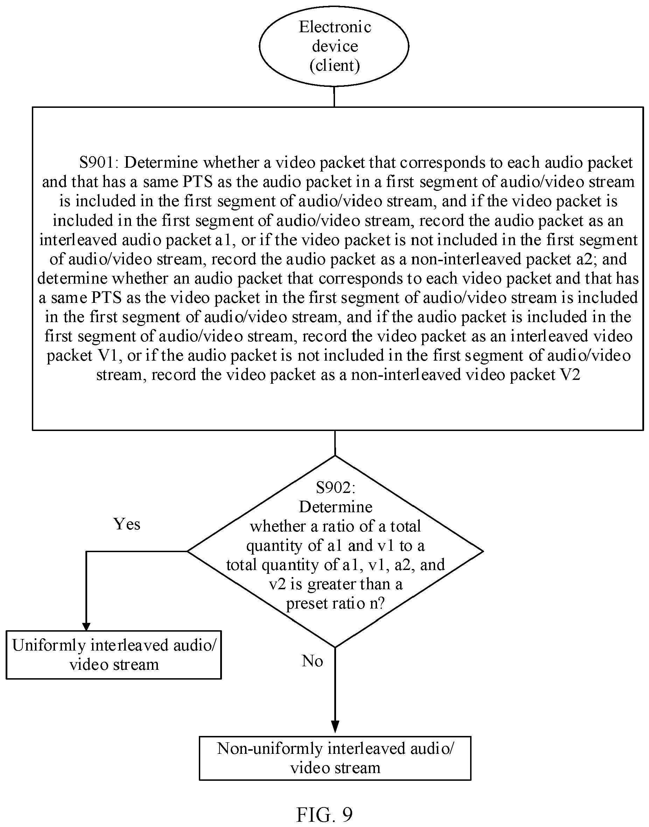

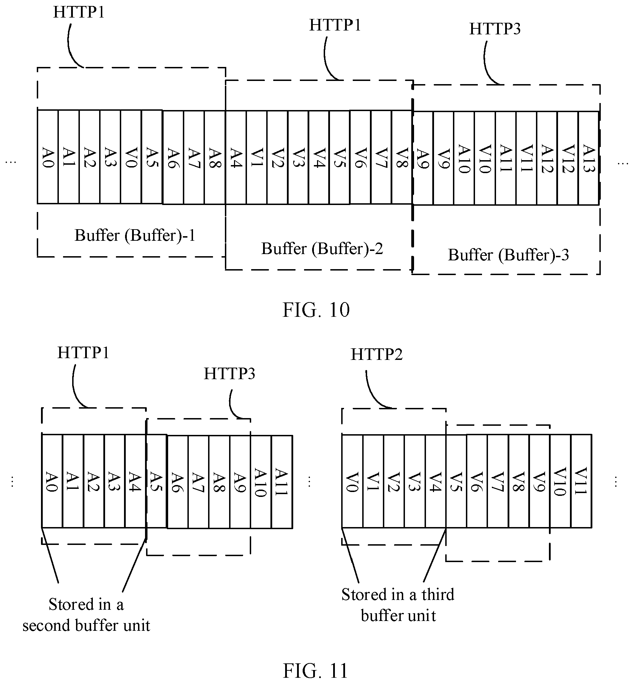

For example, after determining, by using the method shown in FIG. 9, that a stream corresponding to HTTP3 in an embodiment shown in FIG. 10 is a uniformly interleaved stream, the electronic device may read and play A9 and V9, A10 and V10, A11 and V11, and A12 and V12 sequentially in the stream sequence from front to back. Detailed descriptions of FIG. 9 and FIG. 10 are provided later.

If a current media file for online play is not fully played after S804 is performed, the electronic device returns to S801, sends a next HTTP request, obtains a new audio/video stream, and performs the foregoing operation process on the new audio/video stream until all audio/video streams in the current media file for online play are obtained and played.

It should be understood that the new audio/video stream may be uniformly interleaved or non-uniformly interleaved, and a specific type of the new audio/video stream is also determined by the format of the media file stored on the server.

S805: The electronic device reads M data packets from the first buffer unit, and stores the M data packets in a second buffer unit, where M is a positive integer greater than 1. M may be a preset value such as 30, 50, or 100. This is not limited in this application.

In this embodiment of this application, in addition to the first buffer unit, another N buffer units are further disposed in the electronic device, to store data downloaded by using N adjacent HTTP requests. N is a positive integer greater than 1, and the N buffer units are in a one-to-one correspondence with data downloaded by using the N HTTP requests. It should be understood that the N buffer units may alternatively be different storage spaces in the internal memory of the electronic device.

In the following embodiment, for example, N = 2. Specifically, the second buffer unit and a third buffer unit are further disposed in the electronic device, and are configured to store data packets obtained by using two adjacent HTTP requests (for example, the first HTTP request and a second HTTP request in the following description). The second buffer unit and the third buffer unit may be understood as two different buffer spaces, or may be understood as two different buffer areas in a same buffer space. This is not limited in this application.

The electronic device reads the M data packets from the first buffer unit (that is, reads the M data packets from the first segment of audio/video stream), and stores the M data packets in the second buffer unit. It should be understood that the data packets (that is, the M data packets) in the second buffer unit may include an audio packet and a video packet, or may include only audio packets or only video packets, which depends on an interleaving manner of the first segment of audio/video stream.

Optionally, PTSs of the M data packets are continuous.

Optionally, the first segment of audio/video stream includes a total of S data packets, where S ≥ M. The M data packets are first M data packets (to be specific, data packets 1 to M) or last M data packets (to be specific, data packets (S - M + 1) to S) in the first segment of audio/video stream.

Optionally, in S805, before the electronic device reads the M data packets from the first buffer unit, the electronic device may first match an audio packet with a video packet in the first segment of audio/video stream in the first buffer unit (that is, detect an audio packet and a video packet whose PTSs are the same). After any pair of an audio packet and a video packet whose PTSs are the same are read, the electronic device plays the pair of the audio packet and the video packet whose PTSs are the same. Then, the electronic device stores, in the second buffer unit, only M audio packets that do not have matched video packets whose PTSs are the same as those of the audio packets (in other words, all the M data packets in the second buffer unit are audio packets). Alternatively, the electronic device stores, in the second buffer unit, M video packets that do not have matched audio packets whose PTSs are the same as those of the video packets (in other words, all the M data packets in the second buffer unit are video packets). In this way, online play efficiency can be further improved.

S806: The electronic device detects that the M data packets do not include a video packet (for example, a first video packet) whose PTS is the same as that of a first audio packet in the M data packets.

The first audio packet may be any audio packet in the M data packets.

Optionally, the electronic device may sequentially detect, based on a PTS sequence, whether each audio packet in the M data packets has a corresponding video packet (that is, a video packet whose PTS is the same as that of the audio packet).

S807: The electronic device sends the second HTTP request to the server through the client, to request a video packet whose PTS is the same as the first audio packet. The server receives the second HTTP request.

S808: The server returns a second segment of audio/video stream to the electronic device in response to the second HTTP request. The second segment of audio/video stream includes the video packet (that is, the first video packet) whose PTS is the same as that of the first audio packet. The electronic device receives the second segment of audio/video stream, and stores the second segment of audio/video stream in the first buffer unit.

S809: The electronic device reads Y data packets from the first buffer unit, and stores the Y data packets in the third buffer unit, where the Y data packets include the first video packet.

Y is a positive integer. Optionally, Y = M.

It should be noted that, the foregoing S806 to S809 are described by using an example in which the second HTTP request is initiated to obtain a video packet corresponding to an audio packet after it is detected that the audio packet (that is, the first audio packet) does not have a corresponding video packet (that is, the first video packet). However, in actual application, the second HTTP request may alternatively be initiated to obtain video packets corresponding to a plurality of audio packets after it is detected that the plurality of audio packets do not have corresponding video packets.

Alternatively, S806 to S809 may be replaced by the following steps: The M data packets include A audio packets, and the electronic device detects that the M data packets do not include video packets whose PTSs are the same as those of the A audio packets, where A is a positive integer greater than 1. The electronic device sends the second HTTP request to the server through the client, where the second HTTP request is used to request the video packets whose PTSs are the same as those of the A audio packets. The server receives the second HTTP request, and returns a second segment of audio/video stream to the electronic device in response to the second HTTP request, where the second segment of audio/video stream includes the video packets whose PTSs are the same as those of the A audio packets (for example, the second segment of audio/video stream includes B video packets. B ≥ A, and the B video packets include A video packets that are in a one-to-one correspondence with the A audio packets). The electronic device reads Y data packets from the first buffer unit, and stores the Y data packets in the third buffer unit, where the Y data packets include the video packets whose PTSs are the same as those of the A audio packets.

In a possible case, each audio packet in the M data packets does not have a video packet with a same PTS. In this case, the electronic device sends the second HTTP request to the server through the client, to request video packets whose PTSs are the same as those of all audio packets in the M data packets.

In another possible case, only some audio packets in the M data packets do not have video packets with same PTSs. In this case, the electronic device sends the second HTTP request to the server through the client, to request the video packets whose PTSs are the same as those of the audio packets.

For example, the M data packets include seven audio packets (M ≥ 7) in total, and three of the audio packets have video packets whose PTSs are the same as the three audio packets in the M data packets. In this case, the second HTTP request is used to request video packets whose PTSs are the same as those of the other four audio packets, where M is greater than or equal to 4.

Further, it should be noted that S806 to S809 are provided as an example for detecting whether there is a video packet whose PTS is the same as that of an audio packet in the M data packets. However, in specific implementation, whether there is an audio packet whose PTS is the same as that of a video packet in the M data packets may also be detected. For example, after detecting that the M data packets do not include an audio packet (for example, the first audio packet) whose PTS is the same as that of the first video packet in the M data packets, the electronic device sends an HTTP request to request the audio packet whose PTS is the same as that of the first video packet.

S810: The electronic device matches a data packet in the second buffer unit with a data packet in the third buffer unit (that is, detects an audio packet and a video packet whose PTSs are the same) and plays, after any pair of an audio packet and a video packet (for example, the first audio packet and the first video packet) whose PTSs are the same are read, the pair of the audio packet and the video packet whose PTSs are the same.

Then, the electronic device may clear the data packets in the second buffer unit and the third buffer unit, to subsequently store new data packets.

If the current media file for online play is not fully played, the electronic device returns to S801, sends a next HTTP request, obtains a new audio/video stream, and performs S801 to S810 on the new audio/video stream until all audio/video streams in the current media file for online play are obtained and played.

To better understand the foregoing technical solution, a detailed example is provided herein to further describe the foregoing technical solution.

Refer to FIG. 11. For example, M = Y = 5.

Step 1: The client initiates a first HTTP request (recorded as HTTP1) to the server, and downloads a first data segment (a data size of the data segment is less than or equal to a size of a download buffer, that is, a first buffer unit, on the client), where the first data segment includes A0, A1, A2, A2, and A4. The client reads A0, A1, A2, A2, and A4 from the download buffer (that is, the first buffer unit), determines that the first data segment is a non-uniformly interleaved audio/video stream and A0, A1, A2, A2, and A4 do not have corresponding video packets, and stores the audio packets A0, A1, A2, A2, and A4 in the first data segment in a second buffer unit.

Step 2: The client initiates a second HTTP request (recorded as HTTP2) to the server, and downloads a second data segment (a data size of the data segment is less than or equal to the size of the download buffer, that is, the first buffer unit, on the client), where the second data segment includes V0, V1, V2, V2, and V4 (which correspond to A0, A1, A2, A2, and A4 respectively). The client reads V0, V1, V2, V2, and V4 from the download buffer, determines that the second data segment is a non-uniformly interleaved audio/video stream, and stores the video packets V0, V1, V2, V2, and V4 in the second data segment in a third buffer unit.

Step 3: The electronic device reads an audio packet and a video packet whose PTSs are the same from the second buffer unit and the third buffer unit respectively and plays, after any pair of an audio packet and a video packet whose PTSs are the same are read, the pair of the audio packet and the video packet whose PTSs are the same.

For example, if determining that PTSs of A0 and V0 are the same, the electronic device plays A0 and V0 synchronously. If determining that PTSs of A1 and V1 are the same, the electronic device plays A1 and V1 synchronously. If determining that PTSs of A2 and V2 are the same, the electronic device plays A2 and V2 synchronously. If determining that PTSs of A3 and V3 are the same, the electronic device plays A3 and V3 synchronously. If determining that PTSs of A4 and V4 are the same, the electronic device plays A4 and V4 synchronously.

Step 4: The client initiates a third HTTP request (recorded as HTTP3) to the server, downloads a third data segment (a data size of the data segment is less than or equal to the size of the download buffer on the client), and continues to perform the foregoing steps on the third data segment. For specific steps, refer to Steps 1 to 3, and details are not described herein.

It should be understood that, in the foregoing embodiment, matching is performed on data packets that are obtained by using two adjacent HTTP requests (that is, N = 2). In actual application, matching may alternatively be performed on data packets that are obtained by using three, four, or five adjacent HTTP requests (that is, N may alternatively equal 2, 3, 4, or the like). This is not limited in this application.

In this embodiment of this application, for a non-uniformly interleaved audio/video stream, the electronic device enables the client to allocate at least two additional buffers to store data packets that are downloaded for a plurality of times by using HTTP requests, and then performs audio to video synchronization on the data packets in the at least two buffers in batches. Compared with a solution in which audio to video synchronization is performed by repeatedly downloading data packets of a stream for a plurality of times, this embodiment of this application can improve audio to video synchronization efficiency of the client. Compared with a technical solution that uses a local buffer, this embodiment of this application can reduce buffer time. This embodiment of this application is applicable to online play of audio and a video that are of any sizes, and can fundamentally resolve a problem of frame freezing during online play of all audio and videos.

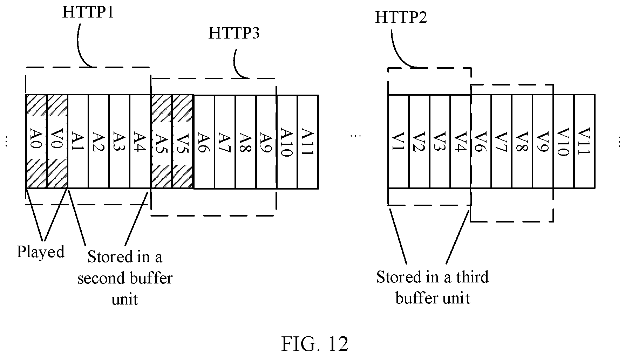

Refer to FIG. 12. For example, M = 6 and Y = 5.

Step 1: The client initiates a first HTTP request (recorded as HTTP1) to the server, and downloads a first data segment (a data size of the data segment is less than or equal to a size of a download buffer, that is, a first buffer unit, on the client), where the first data segment includes A0, V0, A1, A2, A2, and A4. The client reads A0, V0, A1, A2, A2, and A4 from the download buffer (that is, the first buffer unit), determines that the first data segment is a non-uniformly interleaved audio/video stream, plays A0 and V0 because A0 matches V0 (PTSs of A0 and V0 are the same), and stores A1, A2, A2, and A4 in a second buffer unit because A1, A2, A2, and A4 do not have corresponding video packets.

Step 2: The client initiates a second HTTP request (recorded as HTTP2) to the server, and downloads a second data segment (a data size of the data segment is less than or equal to the size of the download buffer, that is, the first buffer unit, on the client), where the second data segment includes V1, V2, V2, and V4 (which correspond to A1, A2, A2, and A4 respectively). The client reads V1, V2, V2, and V4 from the download buffer, determines that the second data segment is a non-uniformly interleaved audio/video stream, and stores the video packets V1, V2, V2, and V4 in the second data segment in a third buffer unit.

Step 3: The electronic device reads an audio packet and a video packet whose PTSs are the same from the second buffer unit and the third buffer unit respectively and plays, after any pair of an audio packet and a video packet whose PTSs are the same are read, the pair of the audio packet and the video packet whose PTSs are the same.

For example, if determining that PTSs of A1 and V1 are the same, the electronic device plays A1 and V1 synchronously. If determining that PTSs of A2 and V2 are the same, the electronic device plays A2 and V2 synchronously. If determining that PTSs of A3 and V3 are the same, the electronic device plays A3 and V3 synchronously. If determining that PTSs of A4 and V4 are the same, the electronic device plays A4 and V4 synchronously.

Step 4: The client initiates a third HTTP request (recorded as HTTP3) to the server, downloads a third data segment (a data size of the data segment is less than or equal to the size of the download buffer on the client), and continues to perform the foregoing steps on the third data segment. For specific steps, refer to Steps 1 to 3, and details are not described herein.

Optionally, in specific implementation, S806 to S809 may alternatively be replaced by the following steps: After S805 is performed, the electronic device directly sends the second HTTP request, where the second HTTP request is used to obtain a second segment of audio/video stream, and a first PTS range of the first segment of audio/video stream and a second PTS range of the second segment of audio/video stream meet a preset condition. The server returns the second segment of audio/video stream in response to the second HTTP request. The electronic device receives the second segment of audio/video stream, and stores Y data packets in the second segment of audio/video stream in the third buffer unit. The first PTS range is a range from a minimum PTS to a maximum PTS of data packets in the first segment of audio/video stream, and the second PTS range is a range from a minimum PTS to a maximum PTS of data packets in the second segment of audio/video stream.

The preset condition may be that the first PTS range and the second PTS range partially overlap, the first PTS range is included in the second PTS range, the first PTS range includes the second PTS range, the first PTS range and the second PTS range are close (for example, do not exceed a preset distance), or the like.

In other words, the electronic device in this embodiment of this application does not need to know an exact matching status between an audio packet and a video packet in the M data packets (that is, may not perform S806), but directly request the second segment of audio/video stream based on the first PTS range of the first segment of audio/video stream.

In this way, audio to video synchronization can be performed on the data packets in the at least two buffers in batches. Therefore, audio to video synchronization efficiency of the client is improved.

The following describes a method for detecting a non-uniformly interleaved stream according to this application. As shown in FIG. 9, the method includes the following steps.

S901: An electronic device uses, as a distance for detecting same PTSs, a size of buffered data requested by a client each time, such as a size of a first segment of audio/video stream (Buffer-1); determines whether a video packet that corresponds to each audio packet and that has a same PTS as the audio packet in the first segment of audio/video stream is included in Buffer-1, and if the video packet is included in Buffer-1, records the audio packet as an interleaved audio packet a1, or if the video packet is not included in Buffer-1, records the audio packet as a non-interleaved packet a2; and determines whether an audio packet that corresponds to each video packet and that has a same PTS as the video packet in the first segment of audio/video stream is within a length distance of the synchronization window Buffer-1, and if the audio packet is within the length distance of the synchronization window Buffer-1, records the video packet as an interleaved video packet V1, or if the audio packet is not within the length distance of the synchronization window Buffer-1, records the video packet as a non-interleaved video packet V2.

S902: The electronic device determines whether a ratio (record as (a1 + v1) (a1 + v1 + a2 + v2)) of a total quantity 2of a1 and v1 to a total quantity of a1, v1, a2, and v2 in the first segment of audio/video stream is greater than a preset ratio n. If the ratio of the total quantity 2of a1 and v1 to the total quantity of a1, v1, a2, and v2 in the first segment of audio/video stream is greater than the preset ratio n, the first segment of audio/video stream is a uniformly interleaved audio/video stream. If the ratio of the total quantity 2of a1 and v1 to the total quantity of a1, v1, a2, and v2 in the first segment of audio/video stream is not greater than the preset ratio n, the first segment of audio/video stream is a non-uniformly interleaved audio/video stream.

n is a regulatory factor, which is also referred to as a coefficient or may further be another name. This is not limited in this embodiment of this application.

Further, the electronic device may adjust n based on a play status (for example, whether frame freezing occurs) of the client when a historical audio/video stream is played. For example, for the historical audio/video stream, if (a1 + v1)/(a1 + v1 + a2 + v2) < p, frame freezing occurs during play on the client, and if (a1 + v1)/(a1 + v1 + a2 + v2) ≥ p, frame freezing does not occur during play on the client. It is determined that n = p. Alternatively, for example, if (a1 + v1)/(a1 + v1 + a2 + v2) ≤ q, frame freezing occurs during play on the client, and if (a1 + v1)/(a1 + v1 + a2 + v2) > q, frame freezing does not occur during play on the client. It is determined that n = q.

Certainly, the foregoing formula used to adjust n is merely an example rather than a limitation, and may be further extended in actual application. For example, if (a1 + vl)/(al + v1 + a2 + v2) < p, frame freezing occurs during play on the client, and if (a1 + vl)/(al + v1 + a2 + v2) ≥ p, frame freezing does not occur during play on the client. It is determined that n = p + Δp, where Δp is a preset coefficient, and 1 - p > Δp ≥ 0. Alternatively, for example, if (a1 + v1)/(a1 + v1 + a2 + v2) ≤ q, frame freezing occurs during play on the client, and if (a1 + vl)/(al + v1 + a2 + v2) > q, frame freezing does not occur during play on the client. It is determined that n = + Δq, where Δq is a preset coefficient, and 1 - q > Δq ≥ 0.

Optionally, an initial value of n may be 0.4, 0.5, 0.6, or the like. This is not limited herein. Δp or Δq may be a specified value, such as 0.01, 0.05, or 0.1. This is not limited herein.

In addition, the electronic device separately performs interleaving type detection on each segment of audio/video stream downloaded by the client from the server. FIG. 10 is used as an example. It is assumed that n of the client is 0.7. For an audio/video stream requested by using HTTP1, if (a1 + v1)/(a1 + v1 + a2 + v2) = 2/9 < 0.7, the electronic device determines that the audio/video stream requested by using HTTP1 is a non-uniformly interleaved audio/video stream. For an audio/video stream requested by using HTTP2, if (a1 + v1)/(a1 + v1 + a2 + v2) = 2/9 < 0.7, the electronic device determines that the audio/video stream requested by using HTTP1 is a non-uniformly interleaved audio/video stream. For an audio/video stream requested by using HTTP3, if (a1 + v1)/(a1 + v1 + a2 + v2) = 8/9 > 0.7, the electronic device determines that the audio/video stream requested by using HTTP1 is a uniformly interleaved audio/video stream.

It can be learned from the foregoing that the electronic device in this embodiment of this application may determine a value of the regulatory factor n based on actual play effects of streams with different interleaving degrees, so as to prevent a fixed determining condition from causing different play effects for audio/video streams with different interleaving degrees.

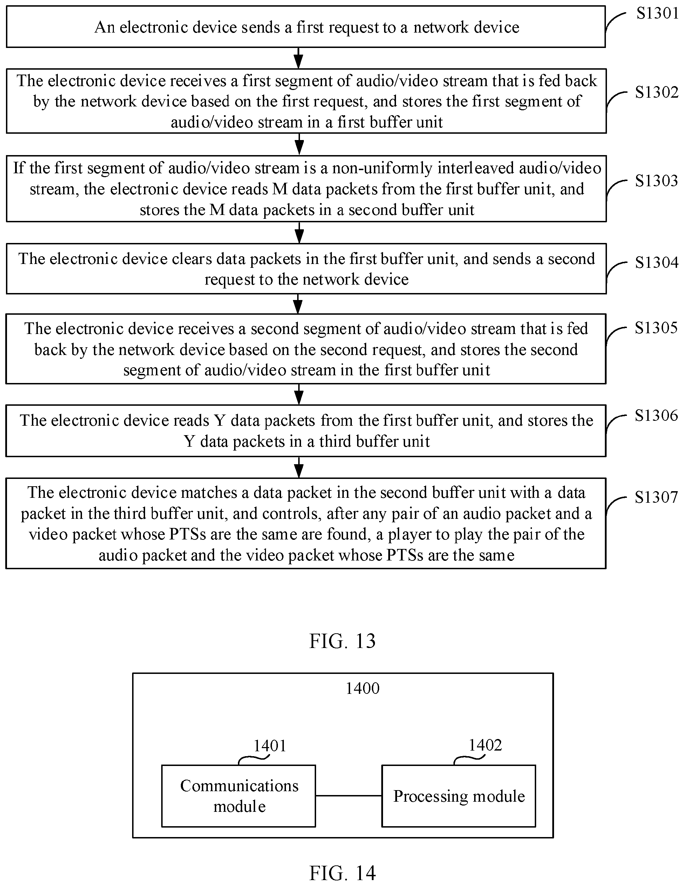

On the basis of the foregoing embodiment, FIG. 13 shows an online audio/video play method according to an embodiment of this application. The method includes the following steps.

S1301: An electronic device sends a first request to a network device.

S1302: The electronic device receives a first segment of audio/video stream that is fed back by the network device based on the first request, and stores the first segment of audio/video stream in a first buffer unit. The first segment of audio/video stream includes a preset quantity of data packets, and the data packets in the first segment of audio/video stream include an audio packet and/or a video packet.

S1303: If the first segment of audio/video stream is a non-uniformly interleaved audio/video stream, the electronic device reads M data packets from the first buffer unit, and stores the M data packets in a second buffer unit, where M is a positive integer greater than 1.

The non-uniformly interleaved audio/video stream means that a quantity of audio packets and video packets that are included in the first segment of audio/video stream and whose presentation timestamps PTSs are the same and storage locations exceed a specified distance threshold.

S1304: The electronic device clears data packets in the first buffer unit, and sends a second request to the network device.

S1305: The electronic device receives a second segment of audio/video stream that is fed back by the network device based on the second request, and stores the second segment of audio/video stream in the first buffer unit. The second segment of audio/video stream includes a preset quantity of data packets, and the data packets in the second segment of audio/video stream include an audio packet and/or a video packet.

S1306: The electronic device reads Y data packets from the first buffer unit, and stores the Y data packets in a third buffer unit, where Y is a positive integer greater than 1.

S1307: The electronic device matches a data packet in the second buffer unit with a data packet in the third buffer unit, and controls, after finding any pair of an audio packet and a video packet whose PTSs are the same, a player to play the pair of the audio packet and the video packet whose PTSs are the same.

For a specific related implementation of the method shown in FIG. 13, refer to related descriptions in the foregoing embodiments. Details are not described herein.

The foregoing embodiments in this application may be used separately, or may be used in combination, to achieve different technical effects.

In the foregoing embodiments provided in this application, the method provided in embodiments of this application is described from a perspective of an electronic device serving as an execution body. To implement the functions in the method provided in the foregoing embodiments of this application, the electronic device may include a hardware structure and/or a software module, to implement the functions in a form of the hardware structure, the software module, or a combination of the hardware structure and the software module. Whether a function in the foregoing functions is implemented by using the hardware structure, the software module, or a combination of the hardware structure and the software module depends on specific application of the technical solutions and design constraints.

Based on a same concept, FIG. 14 shows an electronic device 1400 provided in this application. The electronic device 1400 is configured to perform the method shown in FIG. 8, FIG. 9, or FIG. 13. For example, the electronic device 1400 includes a communications module 1401 and a processing module 1402.

For example, the communications module 1401 is configured to: send a first request to a network device, receive a first segment of audio/video stream that is fed back by the network device based on the first request, and store the first segment of audio/video stream in a first buffer unit. The first segment of audio/video stream includes a preset quantity of data packets, and the data packets in the first segment of audio/video stream include an audio packet and/or a video packet.

The processing module 1402 is configured to: if the first segment of audio/video stream is a non-uniformly interleaved audio/video stream, read M data packets from the first buffer unit, and store the M data packets in a second buffer unit, where M is a positive integer greater than 1; and clear data packets in the first buffer unit.

The non-uniformly interleaved audio/video stream means that a quantity of audio packets and video packets that are included in the first segment of audio/video stream and whose presentation timestamps PTSs are the same and storage locations exceed a specified distance threshold.

The communications module 1401 is further configured to: send a second request to the network device, and receive a second segment of audio/video stream that is fed back by the network device based on the second request.

The processing module 1402 is further configured to: store the second segment of audio/video stream in the first buffer unit, where the second segment of audio/video stream includes a preset quantity of data packets, and the data packets in the second segment of audio/video stream include an audio packet and/or a video packet; read Y data packets from the first buffer unit, and store the Y data packets in a third buffer unit, where Y is a positive integer greater than 1; and match a data packet in the second buffer unit with a data packet in the third buffer unit, and control, after any pair of an audio packet and a video packet whose PTSs are the same are found, a player to play the pair of the audio packet and the video packet whose PTSs are the same.

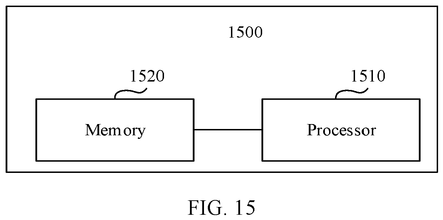

Based on a same concept, FIG. 15 shows an electronic device 1500 provided in this application. The electronic device 1500 includes a processor 1510 and a memory 1520. The memory 1520 stores program instructions. When the program instructions are executed, the electronic device 1500 is enabled to perform the method shown in FIG. 8, FIG. 9, or FIG. 13.

In this embodiment of this application, the processor 1510 may be a general-purpose processor, a digital signal processor (digital signal processor, DSP), an application-specific integrated circuit (application-specific integrated circuit, ASIC), a field-programmable gate array (field-programmable gate array, FPGA) or another programmable logic device, a discrete gate or transistor logic device, or a discrete hardware component. It may implement or perform the methods, the steps, and logical block diagrams that are disclosed in embodiments of this application. The general-purpose processor may be a microprocessor, or the processor may be any conventional processor or the like. Steps of the methods disclosed with reference to embodiments of this application may be directly executed and accomplished through a hardware decoding processor, or may be executed and accomplished by using a combination of hardware and software modules in the decoding processor. The software module may be located in a mature storage medium in the art, such as a random access memory (random access memory, RAM), a flash memory, a read-only memory (read-only memory, ROM), a programmable read-only memory, an electrically erasable programmable memory, or a register. The storage medium is located in the memory, and a processor reads instructions in the memory and completes the steps in the foregoing methods in combination with hardware of the processor.

In this embodiment of this application, the memory 1520 may be a non-volatile memory such as a hard disk drive (hard disk drive, HDD) or a solid-state drive (solid-state drive, SSD), or may be a volatile memory (volatile memory) such as a random access memory (random access memory, RAM). The memory is any other medium that can carry or store expected program code in a form of an instruction or a data structure and that can be accessed by a computer, but is not limited thereto. The memory in embodiments of this application may alternatively be a circuit or any other apparatus that can implement a storage function, and is configured to store the program instructions and/or the data.

For related features of a specific implementation of the apparatus, refer to the foregoing method part. Details are not described herein.

The foregoing embodiments in this application may be used separately, or may be used in combination, to achieve different technical effects.

As described above, the foregoing embodiments are merely used to describe the technical solutions of this application in detail. However, descriptions in the foregoing embodiments are merely used to help understand the methods in embodiments of this application, and should not be construed as a limitation on embodiments of this application. Any variation or replacement readily figured out by persons skilled in the art shall fall within the protection scope of embodiments of this application.

According to the context, the term "when" used in the foregoing embodiments may be interpreted as a meaning of "if', "after", "in response to determining", or "in response to detecting". Similarly, according to the context, the phrase "when it is determined that" or "if (a stated condition or event) is detected" may be interpreted as a meaning of "if it is determined that" or "in response to determining" or "when (a stated condition or event) is detected" or "in response to detecting (a stated condition or event)".

All or some of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on a computer, the procedure or functions according to embodiments of this application are all or partially generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive), or the like.

For a purpose of explanation, the foregoing description is described with reference to a specific embodiment. However, the foregoing example discussion is not intended to be detailed, and is not intended to limit this application to a disclosed precise form. Based on the foregoing teaching content, many modification forms and variation forms are possible. Embodiments are selected and described to fully illustrate the principles of this application and practical application of the principles, so that other persons skilled in the art can make full use of this application and various embodiments that have various modifications applicable to conceived specific usage.

## Claims

1. An online audio/video play method, comprising:
sending a first request to a network device;
receiving a first segment of audio/video stream that is fed back by the network device based on the first request, and storing the first segment of audio/video stream in a first buffer unit, wherein the first segment of audio/video stream comprises a preset quantity of data packets, and the data packets in the first segment of audio/video stream comprise an audio packet and/or a video packet;
if the first segment of audio/video stream is a non-uniformly interleaved audio/video stream, reading M data packets from the first buffer unit, and storing the M data packets in a second buffer unit, wherein M is a positive integer greater than 1, and the non-uniformly interleaved audio/video stream means that a quantity of audio packets and video packets that are comprised in the first segment of audio/video stream and whose presentation timestamps PTSs are the same and storage locations exceed a specified distance threshold;
clearing data packets in the first buffer unit, and sending a second request to the network device;
receiving a second segment of audio/video stream that is fed back by the network device based on the second request, and storing the second segment of audio/video stream in the first buffer unit, wherein the second segment of audio/video stream comprises a preset quantity of data packets, and the data packets in the second segment of audio/video stream comprise an audio packet and/or a video packet;
reading Y data packets from the first buffer unit, and storing the Y data packets in a third buffer unit, wherein Y is a positive integer greater than 1; and
matching a data packet in the second buffer unit with a data packet in the third buffer unit, and controlling, after any pair of an audio packet and a video packet whose PTSs are the same are found, a player to play the pair of the audio packet and the video packet whose PTSs are the same.

2. The method according to claim 1, wherein determining that the first segment of audio/video stream is a non-uniformly interleaved audio/video stream comprises:
detecting, for each audio packet in the first segment of audio/video stream, whether the first segment of audio/video stream has a video packet that has a same PTS as the audio packet, and if the first segment of audio/video stream has the video packet that has a same PTS as the audio packet, recording the audio packet as an interleaved audio packet a1, or if the first segment of audio/video stream does not have the video packet that has a same PTS as the audio packet, recording the audio packet as a non-interleaved audio packet a2; and detecting, for each video packet in the first segment of audio/video stream, whether the first segment of audio/video stream has an audio packet that has a same PTS as the video packet, and if the first segment of audio/video stream has the audio packet that has a same PTS as the video packet, recording the video packet as an interleaved video packet v1, or if the first segment of audio/video stream does not have the audio packet that has a same PTS as the video packet, recording the video packet as a non-interleaved video packet v2; and
if a ratio of a total quantity 2of a1 and v1 to a total quantity of a1, v 1, a2, and v2 in the first segment of audio/video stream is less than a preset value n, determining that the first segment of audio/video stream is a non-uniformly interleaved audio/video stream.

3. The method according to claim 2, wherein the method further comprises:
determining a value of n based on a play status in which the player plays a historical audio/video stream, wherein
if a ratio of a total quantity of a1 and v1 to a total quantity of a1, v1, a2, and v2 in the historical audio/video stream is less than n, the play status of the player is frame freezing.

4. The method according to any one of claims 1 to 3, wherein the sending a second request to the network device comprises:
when the first segment of audio/video stream comprises a first audio packet, determining that the first segment of audio/video stream does not comprise a video packet that has a same PTS as the first audio packet; and
sending the second request to the network device, wherein the second request is used to request the video packet that has a same PTS as the first audio packet.

5. The method according to any one of claims 1 to 3, wherein
all the M data packets are audio packets, and all the Y data packets are video packets;
all the M data packets are video packets, and all the Y data packets are audio packets; or
the M data packets are first M data packets in the first segment of audio/video stream, and the Y data packets are first Y data packets in the second segment of audio/video stream.

6. The method according to any one of claims 1 to 3, wherein before the reading M data packets from the first buffer unit, the method further comprises:
performing matching on data packets in the first buffer unit, and controlling, after any pair of an audio packet and a video packet that have same PTSs are found, the player to play the pair of the audio packet and the video packet that have the same PTSs; and
the reading M data packets from the first buffer unit comprises:
storing, in the second buffer unit, an audio packet that is in the first buffer unit and that does not have a matched video packet having a same PTS as the audio packet; or storing, in the second buffer unit, a video packet that is in the first buffer unit and that does not have a matched audio packet having a same PTS as the video packet.

7. The method according to any one of claims 1 to 3, wherein M = Y

8. The method according to any one of claims 1 to 7, wherein the method further comprises:
if the first segment of audio/video stream is a uniformly interleaved audio/video stream, reading the data packets in the first buffer unit sequentially based on a stream sequence, and controlling, after any pair of an audio packet and a video packet that have same PTSs are read, the player to play the pair of the audio packet and the video packet that have the same PTSs.

9. An electronic device, wherein the electronic device comprises a processor and a memory;
the memory stores program instructions; and
when the program instructions are executed, the electronic device is enabled to perform the method according to any one of claims 1 to 8.

10. A computer-readable storage medium, wherein the computer-readable storage medium comprises program instructions, and when the program instructions are run on a device, the electronic device is enabled to perform the method according to any one of claims 1 to 8.
